# EUROPEAN PATENT SPECIFICATION

(11) **EP 2 161 648 B1**
(45) Date of publication and mention of the grant of the patent: **24.07.2013**
(21) Application number: 09168449.8
(22) Date of filing: 24.08.2009
(51) Int. Cl.: G06F 1/32

(54) **Image processing apparatus has communication portion whose power is controlled by connector cover**
Bildverarbeitungsvorrichtung mit Kommunikationseinheit dessen Energieversorgung durch Steckerabdeckung gesteuert wird
Appareil de traitement d'images ayant une unité de communication, son alimentation en énergie étant controllé par couvercle de connecteur

(30) Priority: 26.08.2008 JP 2008216402
(43) Date of publication of application: 10.03.2010
(73) Proprietor: Oki Data Corporation, Tokyo 108-8551 (JP)
(72) Inventor: Eguchi, Hiroshi, Tokyo 108-8551 (JP)
(74) Representative: Betten & Resch

(56) References cited:
- JP-A- 2001 265 707
- JP-A- 2008 134 765
- US-A1- 2005 227 524
- US-A1- 2007 058 190
- US-A1- 2007 059 959
- US-A1- 2007 119 937
- US-A1- 2008 031 366

## Description

### BACKGROUND OF THE INVENTION

### FIELD OF THE INVENTION

The present invention relates to an image processing apparatus.

### DESCRIPTION OF THE RELATED ART

Conventional image processing apparatuses are capable of communicating image information with external apparatuses through a network. For example, an image processing apparatus is connected to an external apparatus such as a host computer via a network. The image processing apparatus receives image information from the external apparatus, and then processes the image information. Japanese Patent Laid-Open No. 2001-265707 discloses one such image processing apparatus in which a cover is attached to an interface via which the image processing apparatus communicates with the external apparatus. A switch is mounted to the cover so that the switch and the cover operate in an interlocked manner such that opening the cover causes the image processing apparatus to start operating.

However, the aforementioned conventional image processing apparatus is designed to power the interface regardless of whether the apparatus is in operation. This is uneconomical.

JP 2001/265707 A discloses an SCSI connector with an openable/closable SCSI connector cover and a cover switch to be turned on/off by opening/closing said SCSI connector cover. When a power source is turned on and it is decided from the output of the cover switch that the SCSI connector cover is opened, a CPU activates the system after setting the boot of the SCSI device valid to a BBM and when it is decided that the SCSI connector cover is closed, the system is activated after setting the boot of the SCSI device invalid to the BBM.

JP 2008/134765 A discloses a processor such as a printer having a sensor for a USB device to detect USB device connection to a USB host connector.

US 2007/119937 A1 discloses an image forming apparatus having a communication interface which receives image data through the communication interface to form an image. The image forming apparatus includes a power supply unit, a states monitor unit, and a mode switch unit. The power supply unit supplies electric power either in an operation mode in which the electric power necessary to form the image is supplied or in a power saving mode in which stand-by electric power is supplied. The states monitor unit monitors a connection state and a non-connection state of the communication interface. In the power saving mode, the mode switch unit switches the power supply unit to the operation mode, in response to detection by the states monitor unit of either of a change from the non-connection state to the connection state or a change from the connection state to the non-connection state.

US2007/059959 A1 discloses an electrical connector for electrically connecting with a mating connector, including an insulative housing defining a cavity, a number of contacts extending into the cavity, and a detective switch accommodated in the housing. The detective switch includes a stationary switch and a movable switch. The stationary switch and the movable switch respectively include a first and a second engaging portion for connecting/disconnecting with each other. The movable switch includes a spoon-shaped projecting portion positioned in a free end of the second engaging portion and extending into the cavity for engaging with the mating connector.

### SUMMARY OF THE INVENTION

An object of the present invention is to solve the aforementioned drawbacks of a conventional image processing apparatus.

Another object of the invention is to provide an image processing apparatus in which a cover is mounted to cover a switch that connects a communication cable to a communication portion of the image processing apparatus, the switch and the cover being interlocked such that the switch is operated to supply electric power to the communication section only when the communication cable is connected to the communication port.

The present invention is defined in the independent claims. The dependent claims define embodiments.

An image processing apparatus processes images by communicating image information with an external apparatus. A communication portion (30) communicates the image information with the external apparatus. A controlling portion (31) controls the communication portion (30) to be either active or non-active in response to a control signal. The communication portion (30) communicates the image information with the external apparatus through a connector (32). A cover (52) covers the connector (32) when the cover (52) is mounted to the image processing apparatus. A switch (33) generates the control signal. The switch and cover are interlocked with one another such that the switch generates the control signal either when the cover is mounted to the image processing apparatus or when is dismounted from the image processing apparatus.

An image processing apparatus processes images by communicating image information with an external apparatus. A communication portion (30) communicates the image information with the external apparatus. A controlling portion (31) controls the communication portion (30) to be either active or non-active in response to a control signal. The communication portion communicates the image information with the external apparatus through a connector to which a communication cable is attached. The communication portion communicates the image information with the external apparatus through a connector. A switch and the communication cable are interlocked with one another such that the switch generates the control signal either when the cable is inserted into the connector or when the cable is pulled out of the connector.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limiting the present invention, and wherein:
Fig. 1 illustrates the configuration of a control system of an image processing apparatus of a first embodiment;
Fig. 2 illustrates the circuit configuration of a communication portion of a printer;
Figs. 3A and 3B illustrate how a connector cover is attached;
Fig. 4 is a timing chart illustrating the operation of the image processing apparatus of the first embodiment;
Fig. 5 illustrates the circuits of a communication portion of an image processing apparatus of a second embodiment; and
Fig. 6 is a timing chart illustrating the operation of the image processing apparatus of the second embodiment.

### DETAILED DESCRIPTION OF THE INVENTION

Embodiments of the present invention will be described in detail with reference to the accompanying drawings.

### First Embodiment

### {Configuration}

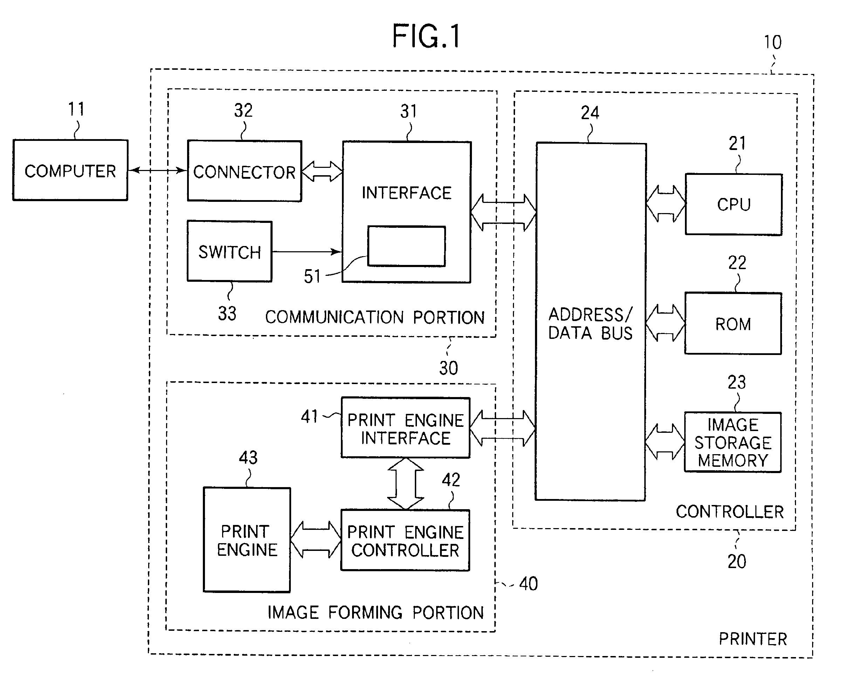

Fig. 1 illustrates the configuration of a control system of an image processing apparatus of a first embodiment.

Referring to Fig. 1, an image processing apparatus or a printer 10 may be of any type, for example, a facsimile machine and a multi-function apparatus that performs the functions of both a facsimile machine and a copying machine. By way of example, the printer 10 is an electrophotographic printer capable of forming monochrome images.

The printer 10 is connected to an external apparatus or a host computer 11 through a communication line (not shown), for example, a local network or an intranet. The printer 10 receives image information or print data from the computer 11, and prints the image information on a recording medium, for example, paper. The computer 11 may be a general purpose computer that includes an arithmetic operation means (e.g., a CPU and MPU), a memory means, and a communication interface. The memory means may be implemented with a magnetic disk or a semiconductor memory device. In fact, the computer 11 may be any types of apparatus as long as it is capable of creating print data that can be printed by the printer 10, and of transmitting the print data to the printer 10.

The printer 10 includes a controller 20, a communication portion 30, and an image forming portion 40. The controller 20 includes a CPU 21, a ROM 22 that stores programs, an image data memory 23, and an address/data bus 24. The communication portion 30 includes an interface 31, an interface connector 32, and a switch 33. The image forming portion 40 includes a print engine interface 41, a print engine controller 42, and a print engine 43.

The CPU 21 performs the control of the overall operation the printer 10, and manages the ROM 22 that stores the control program data for the CPU 21. The image data memory 23 stores image information or print data received from the computer 11. The CPU 21 accesses the ROM 22 and image data memory 23 through the address/data bus 24, and reads and stores various items of data and necessary information for printing the print data.

The CPU 21 is connected to the computer 11 through the interface 31 and interface connector 32 so that the printer 10 can communicate with the computer 11. The interface 31 supports at least one of Universal Serial Bus (USB) 2.0, IEEE 1284, IEEE 1394, and Ethernet (R) protocol, and receives print data according to these standards. The switch 33 opens and closes the signal lines connected to the interface 31, thereby properly connecting the control signals to the printer 10 or disconnecting the control signals from the printer 10.

Under control of the CPU 21, the print engine interface 41 transfers the print data to the print engine controller 42 as well as transmits and receives the control signals. The print engine 43 includes a photoconductive drum, a charging unit, an exposing unit, a developing unit, a transfer roller, and a fixing unit (all not shown), and prints the print data on the recording medium. The print engine controller 42 performs the control over a drive motor and various sensors (all not shown) of the print engine 43.

When the interface 31 receives the print data from the computer 11 through the interface connector 32, an interrupt signal is generated. Then, the CPU 21 enters an interrupt routine to detect receipt of the print data, and causes the interface 31 to direct the received print data to the image data storage memory 23 via the address/data bus 24. The image data storage memory 23 serves as a print buffer so that the print data is directed to the print engine interface 41 via the address/data bus 24. Then, the print engine interface 41 transmits the received print data to the print engine controller 42, which in turn controls the print engine 43 to render the print data into bit map data before printing.

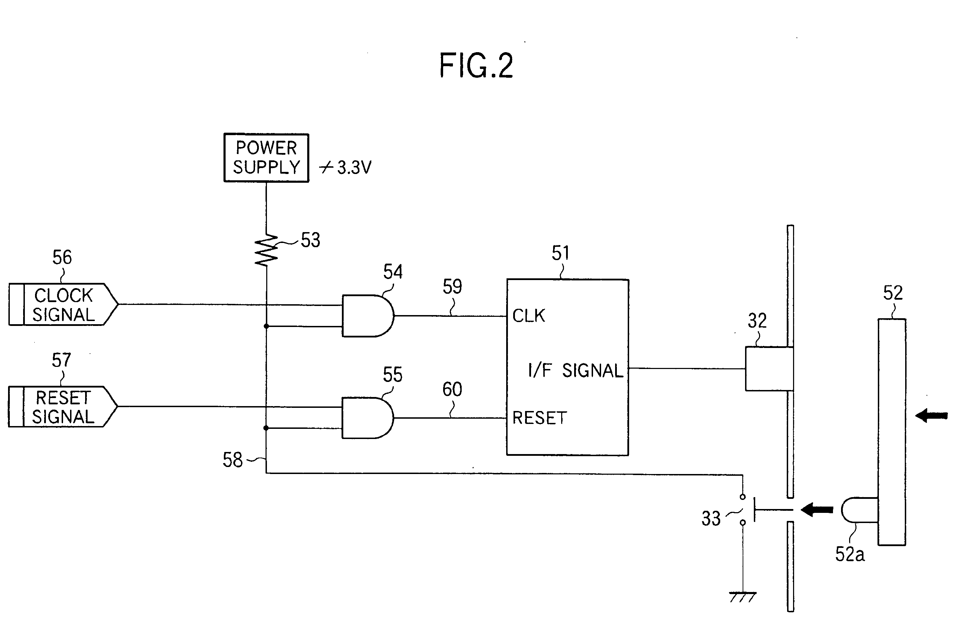

Fig. 2 illustrates the circuit configuration of the communication portion 30 of the printer 10. The circuit configuration of the communication portion 30 of the printer 10 will be described with reference to Fig. 2.

Referring to Fig. 2, the communication portion 30 includes an interface control device 51, an interface connector 32, a switch 33, a cover or a connector cover 52, a pull-up resistor 53, and AND gates 54 and 55.

A clock signal 56 and a reset signal 57 from the controller 20 are input into the AND gates 54 and 55, respectively. A switch output signal 58 is inputted into another inputs of the AND gates 54 and 55, and is also connected to a power supply line (e.g., 3.3 V) via a pull-up resistor 53.

The output signal 59 of the AND gate 54 is fed to a CLK terminal of the interface control device 51, and the output signal 60 of the AND gate 55 is connected to a RESET terminal of the interface control device 51.

The interface control device 51 operates on the clock signal 56 fed to the CLK terminal to control the circuits in the interface control device 51 to be either active or inactive. An I/F signal terminal of the interface control device 51 is connected to the interface connector 32, which in turn serves as a communication cable (not shown) through which the I/F signal terminal is connected to the computer 11.

A connector cover 52 includes a plate-shaped projection 52a, and is positioned such that the connector cover 52 covers the interface connector 32 to prevent the interface cable from being attached to the interface connector 32. When the connector cover 52 is mounted to cover the interface connector 32, the projection 52a pushes the switch 33 so that the switch 33 becomes ON to connect the switch output signal 58 to the ground. When the projection 52a does not push the switch 33, the switch 33 is OFF so that the switch output signal 58 floats from the ground.

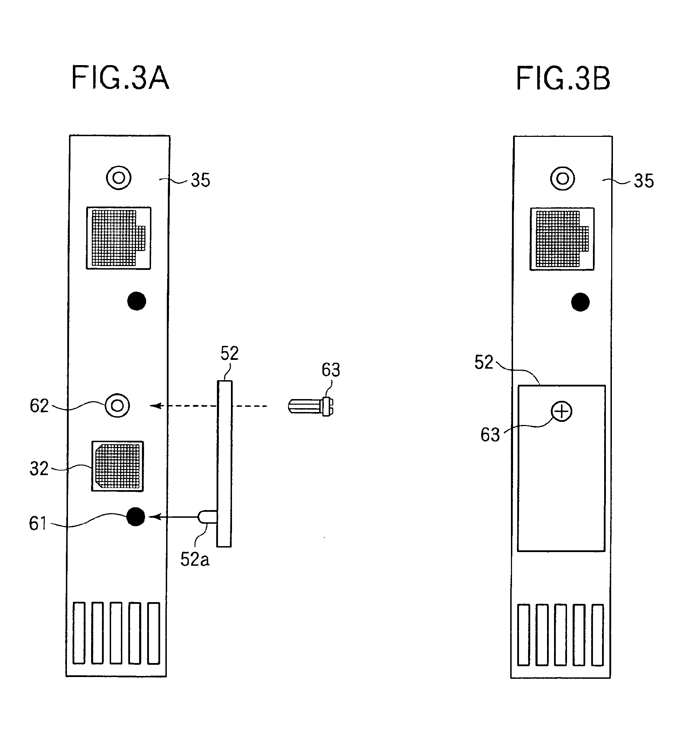

Figs. 3A and 3B illustrate how the connector cover 52 is attached. A description will be given of how the connector cover 52 of the communication port 30 is attached, with reference to Figs. 3A and 3B.

Referring to Fig. 3A, an outer plate 35 is a part of an outer chassis of the printer 10. The outer plate 35 includes an interface connector 32 mounted thereto, and a switch hole 61 and a threaded hole 62 that are formed therein.

The connector cover 52 is mounted to the outer surface of the outer plate 35 such that the projection 52a may extend into the switch hole 61. The screw 63 is screwed into the threaded hole 62, thereby fixing the connector cover 52 to the outer plate 35. Once the connector cover 52 has been mounted to the outer surface of the outer plate 35, the connector cover 52 covers the connector 32 to prevent the interface cable from being connected to the interface connector 32.

When the projection 52a enters the switch hole 61 to press the switch 33, the switch 33 is shifted to the ON position. After the connector cover 52 has been fixed to the outer plate 35, the switch 33 remains ON.

### {Operational of Printer}

The operation of the printer 10 of the aforementioned configuration will be described.

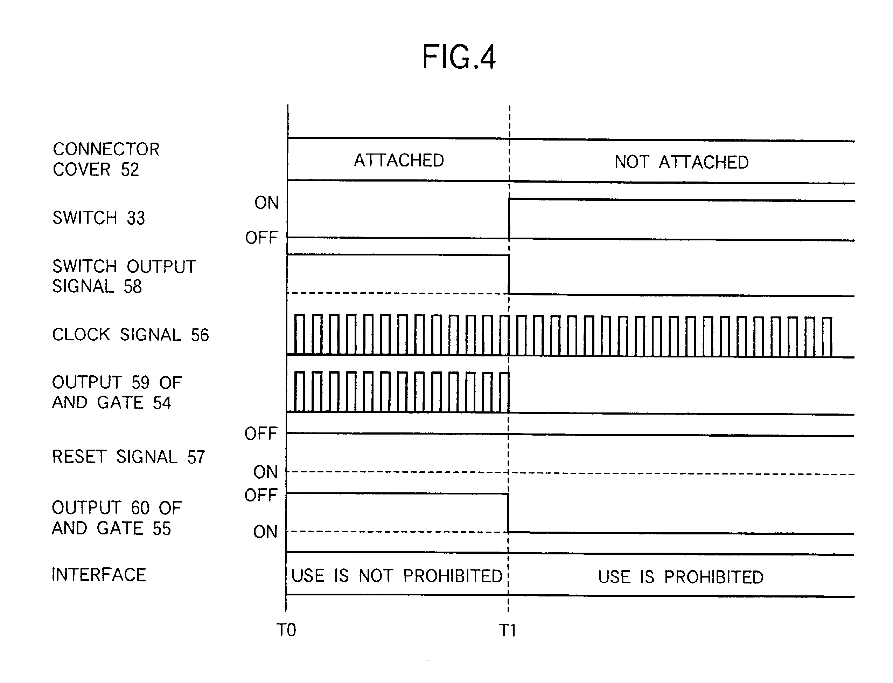

Fig. 4 is a timing chart illustrating the operation of the image processing apparatus of the first embodiment.

When the connector cover 52 has not been mounted, the switch 33 remains OFF. Therefore, the switch output signal 58 of the switch 33 is pulled up to an "H" level by a pull-up resistor 53, feeding an "H" level signal to the AND gate 54 so that the clock signal 56 fed to the AND gate 54 directly appears on the output terminal of the AND gate 54 and is fed to the CLK terminal of the interface control device 51.

Likewise, an "H" level signal is fed to the AND gate 55 so that the reset signal 57 fed to the AND gate 55 directly appears on the output of the AND gate 55. The output of the AND gate 55 is fed to the RESET terminal of the interface control device 51 during a period from time T0 to time T1.

When the connector cover 52 has been mounted to the outer plate at time T1, the switch 33 becomes ON, the switch output signal 58 being grounded, i.e., an "L" level. This causes the input of the AND gate 54 to be at an "L" level so that the clock signal 56 fed to the AND gate 54 will not appear on the output terminal of the AND gate 54. Thus, the CLK terminal of the interface control device 51 remains at an "L" level.

Likewise, an "L" level signal is fed to the AND gate 55 so that the reset signal 57 fed to the AND gate 55 will not appear on the output of the AND gate 55. Thus, the RESET terminal of the interface control device 51 remains at an "L" level after time T1.

Therefore, when the connector cover 52 has been mounted to the outer plate 35, the interface control device 51 is not clocked by the clock signal 56, so that the interface control device 51 consumes less electric power, preventing the image processing apparatus from being active.

When the connector cover 52 has not been mounted to the outer plate 35, the switch 33 is OFF, so that the clock signal 56 is fed to the CLK terminal of the interface control device 51. Thus, the interface control device 51 is clocked, so that the interface control device 51 consumes more power but allows the image processing apparatus to be active.

As described above, the connector cover 52 is mounted to cover the interface connector 32 so that the switch 33 and the connector cover 52 are interlocked such that the output signals 59 and 60 fed to the interface control device 51 are gated. Thus, when the output signals 59 and 60 are not fed thereto, the interface control device 51 becomes inactive, so that the interface control device 51 consumes less electric power. In this manner, the power consumption of the interface 31 is saved.

### Second Embodiment

### {Configuration}

Elements similar to those of the first embodiment have been given the same reference numerals and their detailed description is omitted.

A printer 10 of the second embodiment is of the same configuration as the first embodiment, and therefore a description will be given of a communication portion 30 only.

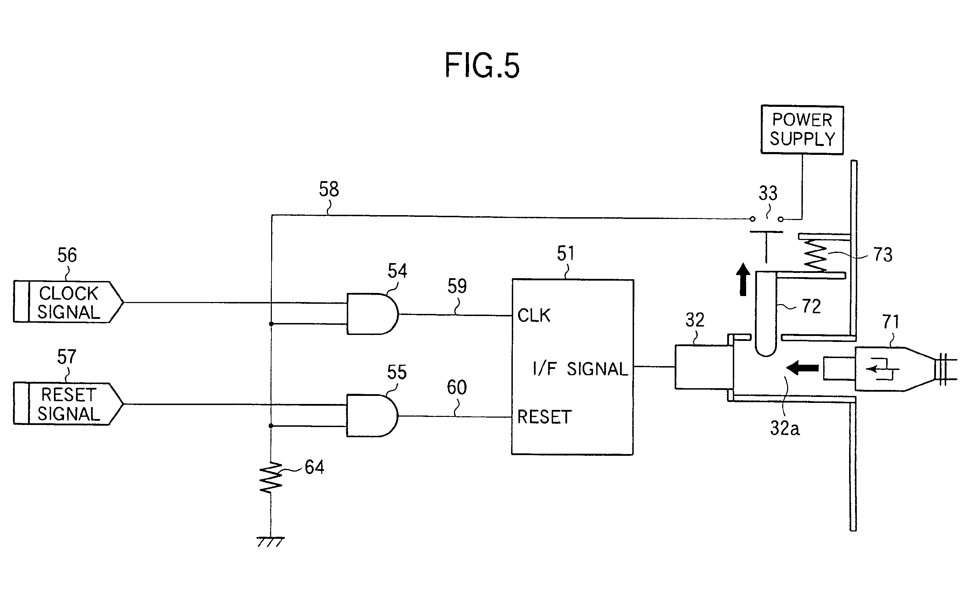

Fig. 5 illustrates the circuits of the communication portion 30 of an image processing apparatus of the second embodiment.

Referring to Fig. 5, the communication portion 30 includes an interface control device 51, an interface connector 32, a switch 33, a communication cable or an interface cable 71, a pull-down resistor 64, AND gates 54 and 56, a switch bar 72, and a spring 73.

A clock signal 56 and a reset signal 57 are fed to the AND gate 54 and AND gate 55, respectively. The switch output signal 58 is input to the AND gates 54 and 55, and is grounded via a pull-down resistor 64.

The output signal 59 of the AND gate 54 is fed to a CLK terminal of the interface control device 51. The output signal 60 of the AND gate 55 is fed to a RESET terminal of the interface control device 51.

The interface control device 51 is clocked by the clock signal 56 fed to the CLK terminal. An I/F signal terminal of the interface control device 51 is connected to an interface connector 32, which in turn is connected to an external apparatus or a computer 11 via an interface cable 71.

A switch bar 72 is disposed in the vicinity of a receiving space 32a of the interface connector 32. When the interface cable 71 is not connected to the interface connector 32, the switch bar 72 is pressed down by a spring 73 so that the switch 33 remains OFF. With the switch 33 in the OFF position, the lower end of the switch bar 72 projects into the receiving space 32a.

When the interface cable 71 is connected into the interface connector 32, the front end of the interface cable 71 enters the receiving space 32a to abut the lower end of the switch bar 72, thereby pushing the switch bar 72 against the urging force of the spring 73. As a result, the switch bar 72 causes the switch 33 to shift to the ON position, so that the switch output signal 58 is connected to the power supply line (3.3 V). When the switch 33 is not pushed up by the switch bar 72, the switch 33 is at its OFF position, so that the switch output signal 58 is not connected to the power supply line.

### {Operation of Printer}

The operation of the printer 10 of the second embodiment will be described.

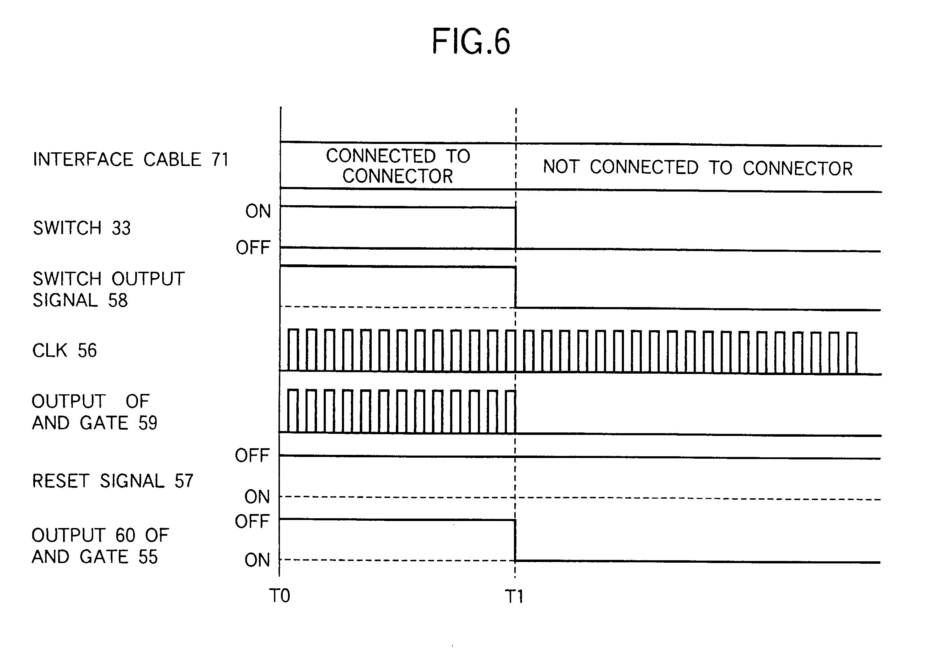

Fig. 6 is a timing chart illustrating the operation of the image processing apparatus of the second embodiment.

If the interface cable 71 has been inserted to the interface connector 32, the switch bar 72 is at the upper position, causing the switch 33 to be ON so that the input of the AND gate 54 is at an "H" level. Thus, the clock signal fed to another input of the AND gate 54 will directly appear on the output of the AND gate 54 as an output signal 59. The output signal 59 is then fed to the CLK terminal of the interface control device 51.

An "H" level signal is also fed to the input of the AND gate 55, so that the reset signal 57 will directly appear on the output of the AND gate 55. The output signal 60 is fed to the RESET terminal of the interface control device 51 during a period from time T0 to time T1.

Upon disconnecting the interface cable 71 from the interface connector 32 at time T1, the switch bar 72 is pushed downward by the urging force of the spring 73. As a result, the switch 33 moves downward to the OFF position, so that the switch output signal 58 is grounded through the pull-down resistor 64. Because the input signal of the AND gate 54 is at an "L" level, the clock signal fed to another input of the AND gate 54 will not appear on the output of the AND gate 54, so that the CLK terminal of the interface control device 51 remains at an "L" level.

The "L" level signal is also fed to the input of the AND gate 55, so that the reset signal 57 fed to another input of the AND gate 55 will not appear on the output of the AND gate 55. Thus, the output signal 60 of the AND gate 55 remains at an "L" level and the RESET terminal of the interface control device 5 is at an "L" level after time T1.

Therefore, if the interface cable 71 has not been connected to the interface connector 32, the interface control device 51 is not clocked by the clock signal 56, so that the interface control device 51 becomes inactive. In this manner, the power consumption of the interface 31 may be minimized.

If the interface cable 71 has been connected to the interface connector 32, the clock signal 56 is fed to the CLK terminal of the interface control device 51, so that the interface control device 51 is clocked. Thus, the interface control device 51 becomes active, allowing the apparatus to be active or to operate properly.

Connecting the interface cable 71 into the interface connector 32 or disconnecting the interface cable 71 from the interface connector 32 causes the switch to be ON or OFF, so that the output signals 59 and 60 of the AND gates 54 and 55 for controlling the interface control device 51 are gated. The second embodiment ensures that the printer 10 is prevented from consuming electric power without using the connector cover 52 of the first embodiment. Thus, the second embodiment is more effective in consuming a least amount of electric power than the first embodiment.

In this manner, the invention may be applied not only to the printer 10 shown in Fig. 1 but also to a variety of image forming apparatuses including a facsimile machine, a copying machine, a multi-function apparatus, and other types of peripheral apparatuses.

The invention being thus described, it will be obvious that the same may be varied in many ways. Such variations are not to be regarded as a departure from the scope of the invention, and all such modifications as would be obvious to one skilled in the art intended to be included within the scope of the following claims.

## Claims

1. An image processing apparatus that processes images by communicating image information with an external apparatus, the image processing apparatus comprising:
a communication portion (30, 51) that communicates the image information with the external apparatus;
a connector (32) through which said communication portion (30, 51) communicates the image information with the external apparatus;
a cover (52) that covers said connector (32) when said cover (52) is mounted to the image processing apparatus; and
a switch (33) that generates a control signal, said switch (33) and said cover (52) being interlocked with one another such that said switch (33) generates the control signal either when said cover (52) is mounted to the image processing apparatus or when is dismounted from the image processing apparatus,
**characterized in that** said image processing apparatus comprises a controlling portion (31) that controls said communication portion (30, 51) to be either active or inactive,
wherein a clock signal and said control signal are input to an AND gate (54) being configured to feed, when said control signal is generated, said clock signal directly to said communication portion (30, 51), and
wherein said communication portion (30, 51) is active when said clock signal is fed to said communication portion (30, 51) and inactive when said clock signal is not fed to said communication portion (30, 51).

2. The image processing apparatus according to claim 1, wherein said switch (33) generates the control signal when said cover (52) is mounted to the image processing apparatus such that said communication portion (30, 51) is inactive.

3. The image processing apparatus according to claim 1, wherein said switch (33) generates the control signal when said cover (52) is dismounted from the image processing apparatus such that said communication portion (30, 51) is active.

4. An image processing apparatus that processes images by communicating image information with an external apparatus, the image processing apparatus comprising:
a communication portion (30, 51) that communicates the image information with the external apparatus;
a connector (32) into which a communication cable (71) is attached such that said communication portion (30, 51) communicates the image information with the external apparatus; and
a switch (33) that generates a control signal, said switch (33) and the communication cable (71) being interlocked with one another such that said switch (33) generates the control signal either when the communication cable (71) is inserted into the connector (32) or when the communication cable (71) is pulled out of the connector (32),
**characterized in that** said image processing apparatus comprises a controlling portion (31) that controls said communication portion (30, 51) to be either active or inactive,
wherein a clock signal and said control signal are input to an AND gate (54) being configured to feed, when said control signal is generated, said clock signal directly to said communication portion (30, 51), and
wherein said communication portion (30, 51) is active when said clock signal is fed to said communication portion (30, 51) and inactive when said clock signal is not fed to said communication portion (30, 51).

5. The image processing apparatus according to claim 4, wherein said switch (33) generates the control signal when the communication cable (71) is inserted into said connector (32) such that said communication portion (30, 51) is active.

6. The image processing apparatus according to claim 4, wherein said switch (33) generates the control signal when the communication cable (71) is pulled out of said connector (32) such that said communication portion (30, 51) is inactive.

## Patentansprüche

1. Bildverarbeitungsvorrichtung, welche Bilder durch Kommunizieren von Bildinformation mit einer externen Vorrichtung verarbeitet, wobei die Bildverarbeitungsvorrichtung umfasst:
einen Kommunikationsbereich (30, 51), welcher die Bildinformation mit der externen Vorrichtung kommuniziert;
einen Verbinder (32), durch welchen der Kommunikationsbereich (30, 51) die Bildinformation mit der externen Vorrichtung kommuniziert;
eine Abdeckung (52), welche den Verbinder (52) abdeckt, wenn die Abdeckung (52) an der Bildverarbeitungsvorrichtung angebracht ist; und
einen Umschalter (33), welcher ein Steuersignal erzeugt, wobei der Umschalter (33) und die Abdeckung (52) derart ineinander greifen, dass der Umschalter (33) das Steuersignal erzeugt, wenn die Abdeckung (52) entweder an der Bildverarbeitungsvorrichtung angebracht ist oder wenn sie von der Bildverarbeitungsvorrichtung abgenommen ist,
**dadurch gekennzeichnet, dass** die Bildverarbeitungsvorrichtung einen Steuerbereich (31) umfasst, welcher den Kommunikationsbereich (30, 51) so steuert, dass er entweder aktiv oder inaktiv ist,
wobei ein Taktsignal und das Steuersignal einem UND-Gatter (54) eingegeben sind, welches dazu eingerichtet ist, das Taktsignal direkt an den Kommunikationsbereich (30, 51) zuzuführen, wenn das Steuersignal erzeugt ist, und
wobei der Kommunikationsbereich (30, 51) aktiv ist, wenn das Taktsignal an den Kommunikationsbereich (30, 51) zugeführt ist, und inaktiv ist, wenn das Taktsignal nicht an den Kommunikationsbereich (30, 51) zugeführt ist.

2. Bildverarbeitungsvorrichtung nach Anspruch 1, wobei der Umschalter (33) das Steuersignal derart erzeugt, dass der Kommunikationsbereich (30, 51) inaktiv ist, wenn die Abdeckung (52) an der Bildverarbeitungsvorrichtung angebracht ist.

3. Bildverarbeitungsvorrichtung nach Anspruch 1, wobei der Umschalter (33) das Steuersignal derart erzeugt, dass der Kommunikationsbereich (30, 51) aktiv ist, wenn die Abdeckung (52) von der Bildverarbeitungsvorrichtung abgenommen ist.

4. Bildverarbeitungsvorrichtung, die Bilder durch Kommunizieren von Bildinformation mit einer externen Vorrichtung verarbeitet, wobei die Bildverarbeitungsvorrichtung umfasst:
einen Kommunikationsbereich (30, 51), welcher die Bildinformation mit der externen Vorrichtung kommuniziert;
einen Verbinder (32), in welchem ein Kommunikationskabel (71) derart angebracht ist, dass der Kommunikationsbereich (30, 51) die Bildinformation mit der externen Vorrichtung kommuniziert; und
einen Umschalter (33), welcher ein Steuersignal erzeugt, wobei der Umschalter (33) und das Kommunikationskabel (71) derart ineinander greifen, dass der Umschalter (33) das Steuersignal erzeugt, wenn das Kommunikationskabel (71) entweder in den Verbinder (32) eingesetzt ist oder wenn das Kommunikationskabel (71) aus dem Verbinder (32) herausgezogen ist,
**dadurch gekennzeichnet, dass** die Bildverarbeitungsvorrichtung einen Steuerbereich (31) umfasst, welcher den Kommunikationsbereich (30, 51) so steuert, dass er entweder aktiv oder inaktiv ist,
wobei ein Taktsignal und das Steuersignal einem UND-Gatter (54) eingegeben sind, welches dazu eingerichtet ist, das Taktsignal direkt an den Kommunikationsbereich (30, 51) zuzuführen, wenn das Steuersignal erzeugt ist, und
wobei der Kommunikationsbereich (30, 51) aktiv ist, wenn das Taktsignal an den Kommunikationsbereich (30, 51) zugeführt ist, und inaktiv ist, wenn das Taktsignal nicht an den Kommunikationsbereich (30, 51) zugeführt ist.

5. Bildverarbeitungsvorrichtung nach Anspruch 4, wobei der Umschalter (33) das Steuersignal derart erzeugt, dass der Kommunikationsbereich (30, 51) aktiv ist, wenn das Kommunikationskabel (71) in den Verbinder (32) eingesetzt ist.

6. Bildverarbeitungsvorrichtung nach Anspruch 4, wobei der Umschalter (33) das Steuersignal derart erzeugt, dass der Kommunikationsbereich (30, 51) inaktiv ist, wenn das Kommunikationskabel (71) aus dem Verbinder (32) herausgezogen ist.

## Revendications

1. Appareil de traitement d'images qui traite des images en établissant une communication d'informations d'images avec un appareil externe, l'appareil de traitement d'images comprenant :
une partie de communication (30, 51) qui établit une communication des informations d'images avec l'appareil externe ;
un connecteur (32) à travers lequel ladite partie de communication (30, 51) établit une communication des informations d'images avec l'appareil externe ;
un couvercle (52) qui couvre ledit connecteur (32) lorsque ledit couvercle (52) est monté sur l'appareil de traitement d'images ; et
un commutateur (33) qui génère un signal de commande, ledit commutateur (33) et ledit couvercle (52) étant verrouillés l'un avec l'autre de sorte que ledit commutateur (33) génère le signal de commande, soit lorsque ledit couvercle (52) est monté sur l'appareil de traitement d'images ou lorsqu'il est démonté de l'appareil de traitement d'images,
**caractérisé en ce que** ledit appareil de traitement d'images comprend une partie de commande (31) qui commande ladite partie de communication (30, 51) pour être soit active ou inactive,
où un signal d'horloge et ledit signal de commande sont introduits à une porte ET (54) étant configurée pour alimenter, lorsque ledit signal de commande est généré, ledit signal d'horloge directement à ladite partie de communication (30, 51), et
où ladite partie de communication (30, 51) est active lorsque ledit signal d'horloge est alimenté à ladite partie de communication (30, 51) et inactive lorsque ledit signal d'horloge n'est pas alimenté à ladite partie de communication (30, 51).

2. Appareil de traitement d'images selon la revendication 1, dans lequel ledit commutateur (33) génère le signal de commande lorsque ledit couvercle (52) est monté sur l'appareil de traitement d'images de sorte que ladite partie de communication (30, 51) soit inactive.

3. Appareil de traitement d'images selon la revendication 1, dans lequel ledit commutateur (33) génère le signal de commande lorsque ledit couvercle (52) est démonté de l'appareil de traitement d'images de sorte que ladite partie de communication (30, 51) soit active.

4. Appareil de traitement d'images qui traite des images en établissant une communication d'informations d'images avec un appareil externe, l'appareil de traitement d'images comprenant :
une partie de communication (30, 51) qui établit une communication des informations d'images avec l'appareil externe ;
un connecteur (32) dans lequel un câble de communication (71) est fixé de sorte que ladite partie de communication (30, 51) établisse une communication des informations d'images avec l'appareil externe ; et
un commutateur (33) qui génère un signal de commande, ledit commutateur (33) et le câble de communication (71) étant verrouillés l'un avec l'autre de sorte que ledit commutateur (33) génère le signal de commande, soit lorsque le câble de communication (71) est inséré dans le connecteur (32) ou lorsque le câble de communication (71) est retiré du connecteur (32),
**caractérisé en ce que** ledit appareil de traitement d'images comprend une partie de commande (31) qui commande ladite partie de communication (30, 51) pour être soit active ou inactive,
dans lequel un signal d'horloge et ledit signal de commande sont introduits à une porte ET (54) étant configurée pour alimenter, lorsque ledit signal de commande est généré, ledit signal d'horloge directement à ladite partie de communication (30, 51), et
dans lequel ladite partie de communication (30, 51) est active lorsque ledit signal d'horloge est alimenté à ladite partie de communication (30, 51) et inactive lorsque ledit signal d'horloge n'est pas alimenté à ladite partie de communication (30, 51).

5. Appareil de traitement d'images selon la revendication 4, dans lequel ledit commutateur (33) génère le signal de commande lorsque le câble de communication (71) est inséré dans ledit connecteur (32) de sorte que ladite partie de communication (30, 51) soit active.

6. Appareil de traitement d'images selon la revendication 4, dans lequel ledit commutateur (33) génère le signal de commande lorsque le câble de communication (71) est retiré dudit connecteur (32) de sorte que ladite partie de communication (30, 51) soit inactive.
